(19) Europäisches Patentamt
European Patent Office
Office européen des brevets

(11) **EP 2 220 458 B1**

(12) **FASCICULE DE BREVET EUROPEEN**

(45) Date de publication et mention
de la délivrance du brevet:
**21.12.2011 Bulletin 2011/51**

(21) Numéro de dépôt: **08851290.0**

(22) Date de dépôt: **21.11.2008**

(51) Int Cl.:
***G01C 21/16*** *(2006.01)*   ***G01C 25/00*** *(2006.01)*

(86) Numéro de dépôt international:
**PCT/EP2008/066031**

(87) Numéro de publication internationale:
**WO 2009/065945 (28.05.2009 Gazette 2009/22)**

(54) **SYSTÈME COMPRENANT DEUX INSTRUMENTS COMBINÉS ET PROCÉDÉ D'ALIGNEMENT DU SYSTÈME**

SYSTEM MIT ZWEI KOMBINIERTEN INSTRUMENTEN UND VERFAHREN ZUM AUSRICHTEN DES SYSTEMS

SYSTEM INCLUDING TWO COMBINED INSTRUMENTS AND METHOD FOR ALIGNING SAID SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.11.2007 FR 0708217**

(43) Date de publication de la demande:
**25.08.2010 Bulletin 2010/34**

(73) Titulaire: **THALES**
**92200 Neuilly-sur-Seine (FR)**

(72) Inventeur: **COLLIAU, Florent**
**F-41190 CHAMBON SUR CISSE (FR)**

(74) Mandataire: **Collet, Alain**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 557 591   WO-A-2005/114106**
**US-A- 5 245 909**

**Description**

L'invention concerne les instruments d'aide au pilotage des aéronefs. Elle concerne plus particulièrement mais non exclusivement les instruments de secours équipant les aéronefs et destinés à afficher des données de navigation essentielles de maniere redondante avec les systèmes primaires de l'aeronef.

Un instrument combiné de secours, (bien connu dans la littérature anglo-saxonne sous le nom de integrated electronics standby instrument) permet l'affichage de paramètres de vol tel que l'attitude de l'aéronef, son altitude et sa vitesse et éventuellement quelques autres données indépendamment des systèmes primaires, de manière plus sommaire et avec une précision plus faible. Les informations affichées sont calculées directement par l'instrument combiné de secours qui affiche sur un même écran, généralement en couleur, l'ensemble des informations de secours. Les capteurs associés à l'instrument combiné de secours tels que des capteurs de pression pour la mesure des pressions totale Pt et statique Ps de l'air entourant l'aéronef et une unité de mesure inertielle comportant par exemple des gyromètres et des accéléromètres pour la détermination de l'attitude de l'aéronef sont habituellement intégrés dans cet instrument. En cas de panne du système d'affichage primaire, le pilote utilise les données affichées sur l'instrument combiné de secours pour assurer le pilotage de l'aéronef. L'affichage suit généralement la même présentation que celui de des systèmes primaires.

A ce jour, les planches de bord ne disposent que d'un seul instrument combiné de secours, même lorsque l'aéronef est piloté par deux pilotes. L'instrument combiné de secours est placé au centre de la planche de bord et est utilisable par les deux pilotes. Avec l'apparition d'avions très gros porteur, les constructeurs d'aéronefs ont souhaité placer deux instruments combinés de secours utilisable chacun par l'un des deux pilotes.

Les informations d'attitudes sont affichées dans un référentiel lié à la terre et sont calculées à partir de données issues d'une unité de mesure inertielle présente dans l'instrument combiné de secours. Cette unité de mesure inertielle comprend, par exemple, des gyromètres et des accéléromètres subissant une dérive intrinsèque ainsi que la rotation de la terre. Une phase d'alignement de plusieurs dizaines de secondes est nécessaire au démarrage de l'instrument combiné de secours afin de converger vers une estimation précise de ses dérives afin de les soustraire aux mesures dans le but d'obtenir l'attitude de l'aéronef de façon la plus précise possible.

Une méthode d'alignement mise en oeuvre dans les instruments combinés de secours consiste à imposer l'immobilité de l'instrument pendant cette phase d'alignement afin de ne pas induire d'erreurs d'estimations de dérives gyrométriques dues aux mouvements de l'aéronef. Cette méthode est utilisable lorsque l'aéronef est au sol. En vol, si par exemple l'aéronef subit une panne d'alimentation électrique de ses unités de mesure inertielles, une procédure d'alignement consiste à imposer à l'aéronef un vol stabilisé, ce qui peut être difficile à réaliser. De plus, tout écart par rapport à une stabilisation parfaite est interprété à tort comme une dérive de l'unité de mesure inertielle.

Une autre méthode d'alignement consiste à utiliser une source d'informations extérieures pour l'estimation d'éventuels mouvements de l'aéronef. Mais la nécessité d'autonomie de l'instrument combiné de secours limite la possibilité d'utiliser cette source extérieure. Par exemple, ceci complexifie l'alignement d'instrument combiné de secours monté à bord d'un hélicoptère embarqué sur un navire, les mouvements du navire empêchant l'instrument de secours d'être immobile.

Le document WO 2005/114106 A décrit un système comprenant plusieurs instruments de navigation pouvant être montés à bord d'un aéronef. Ce système ne comprend de correction mutuelle des dérives de chacun des instruments.

Le document EP 0 557 591 A décrit un système comprenant plusieurs instruments de navigation, munis chacun d'une unité de mesure inertielle, et comprenant des moyens d'alignement mutuels nécessitant plusieurs positions relatives distinctes des deux instruments pour l'alignement. Les instruments ne sont donc pas fixes entre eux.

L'invention vise à pallier tout ou partie des problèmes cités plus haut en proposant de réaliser un alignement d'unités de mesure inertielle sans faire appel à une source d'informations extérieures, même si les unités de mesure inertielle sont en mouvement dans un repère lié à la terre.

A cet effet, l'invention a pour objet un système selon la revendicaiton 1.

L'invention a également pour objet un procédé, selon la revendication 7, d'alignement d'un système comprenant deux instruments montés à bord d'un aéronef, et des moyens de communication entre les deux instruments, chaque instrument comportant une unité de mesure inertielle autonome, consistant à aligner mutuellement chaque unité de mesure inertielle à partir d'une position relative de chaque instrument et de mesures effectuées par chaque instrument pendant une même période de temps.

L'invention sera mieux comprise et d'autres avantages apparaîtront à la lecture de la description détaillée d'un mode de réalisation donné à titre d'exemple, description illustrée par le dessin joint dans lequel :

la figure 1 représente un système comprenant deux instruments combinés de secours ;
la figure 2 représente schématiquement la détermination de l'attitude dans un instrument combiné de secours ;
la figure 3 illustre un exemple d'alignement conforme à l'invention du système représenté figure 1.

Par souci de clarté, les mêmes éléments porteront les mêmes repères dans les différentes figures.

La description qui suit est faite en rapport à un système comprenant deux instruments combinés de secours. Il est bien entendu possible de mettre en oeuvre l'invention à partir de tout système comprenant deux instruments ayant chacun une unité de mesure inertielle.

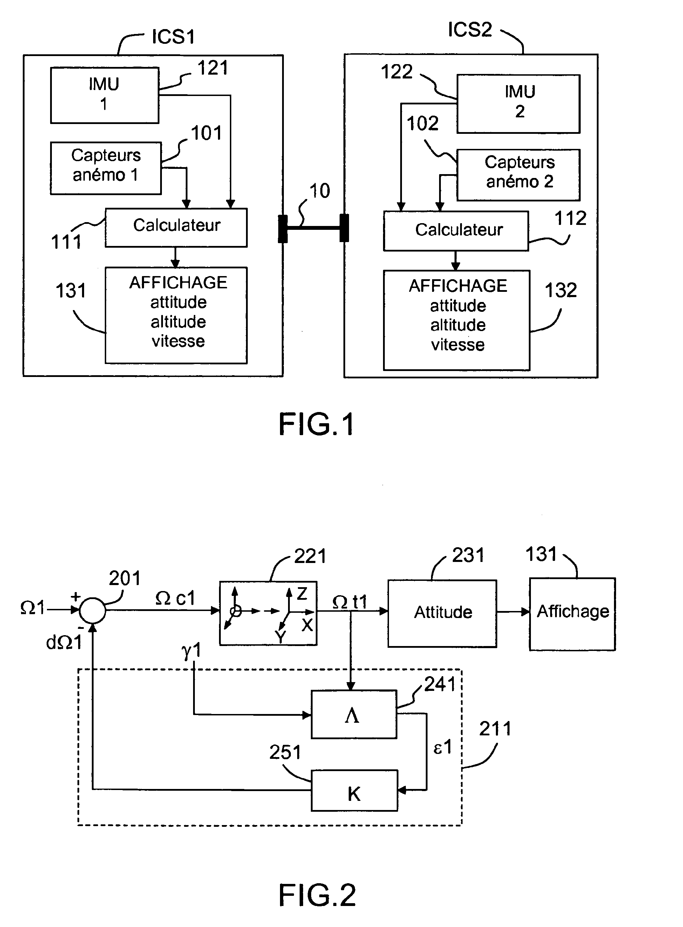

La figure 1 représente un système comprenant deux instruments combinés de secours ICS1 et ICS2 destinés à équiper une planche de bord d'aéronef. Le système est habituellement utilisé en secours d'un système primaire équipant par ailleurs la planche de bord. Il est également possible de mettre en oeuvre le système de la figure 1, non pas comme système de secours, mais comme système primaire dans des aéronefs de plus petite capacité. Les instruments assurent alors par eux mêmes la redondance des capteurs et de l'affichage. Les deux instruments ICS1 et ICS2 sont avantageusement identiques afin d'améliorer la standardisation de l'équipement de l'aéronef.

Chaque instrument ICS1 et ICS2 comporte des capteurs anémo-barométriques 10i, i représentant le numéro de l'instrument combiné de secours ICS n°1 ou ICS n°2. Pour la suite de la description, on utilisera cette convention pour distinguer les éléments semblables des deux instruments combinés de secours ICS1 et ICS2. Les capteurs anémo-barométriques 101 et 102 sont reliés à des prises de pression non représentées sur la figure 1 et disposées sur la peau de l'aéronef. Les prises de pressions et les capteurs anémo-barométriques 101 et 102 permettent de déterminer la pression statique Ps et la pression totale Pt de l'air entourant l'aéronef. A partir de ces pressions, l'instrument combiné ICS1 ou ICS2 détermine au moyen d'un calculateur, respectivement 111 et 112, l'altitude et la vitesse de l'aéronef.

Chaque instrument combiné de secours ICS1 et ICS2 comporte également une unité de mesure inertielle 12i. Les unités de mesure inertielle 121 et 122 peuvent comporter des accéléromètres et des gyromètres. Les unités de mesure inertielle 121 et 122 permettent à l'instrument combiné ICS1 ou ICS2 de déterminer l'attitude de l'aéronef.

L'altitude, la vitesse, et l'attitude de l'aéronef forment les paramètres de vol de l'aéronef. Les unités de mesure inertielle 121 et 122 et les capteurs anémo-barométriques 101 et 102 ainsi que les calculateurs associés 111 et 112 forment des moyens de détermination des paramètres de vol. Ces moyens de détermination sont autonomes car ils appartiennent à l'instrument combiné de secours considéré et peuvent fonctionner sans autre information extérieure que celles provenant des prises de pression.

Chaque instrument combiné de secours ICS1 et ICS2 comporte des moyens d'affichage, respectivement 131 et 132 des paramètres de vol. L'attitude est généralement affichée sous forme d'une ligne d'horizon mobile par rapport à une silhouette fixe représentant l'aéronef. Chaque instrument combiné de secours ICS1 et ICS2 peut également afficher des paramètres de navigation contenant des informations sur la route que l'aéronef doit suivre. Ces informations sont reçues d'autres systèmes équipant la planche de bord comme par exemple un pilote automatique de l'aéronef. Dans un système comprenant deux instruments combinés de secours ICS1 et ICS2, l'un des instruments peut afficher les paramètres de vol et l'autre les paramètres de navigation.

Le système comporte des moyens de communication 10 entre les deux instruments combinés de secours ICS1 et ICS2 utilisant par exemple une liaison série réalisée au moyen d'un conducteur électrique reliant les deux instruments combinés de secours ICS1 et ICS2. Le protocole de transfert de donnée utilise une norme de transmission de donnée numérique. Les moyens de communication 10 permettent par exemple d'échanger des informations sur l'affichage des deux instruments combinés de secours ICS1 et ICS2, par exemple pour éviter que les deux instruments n'affichent les mêmes informations, paramètres de vol ou paramètres de navigation. Les moyens de communication 10 sont également utilisés pour mettre en oeuvre l'invention et échanger entre les deux instruments combinés de secours ICS1 et ICS2 des informations permettant leur alignement mutuel.

La figure 2 représente schématiquement la détermination de l'attitude dans un instrument combiné de secours en l'occurrence ICS1. On pourra bien entendu procéder de la même façon pour l'instrument combiné de secours ICS2. Des gyromètres de l'unité de mesure inertielle 121 délivrent une information notée $\Omega1$ comprenant des vitesses angulaires selon trois axes et subies par l'instrument combiné de secours ICS1. L'information $\Omega1$ est corrigée au moyen d'un opérateur 201 des dérives internes de l'unité de mesure inertielle et de la rotation de la terre. Par la suite, on assimilera la rotation de la terre et la dérive et ces deux paramètres réunis seront notés $d\Omega21$. Des moyens 211 pour déterminer la dérive $d\Omega1$ seront décrits plus loin. A l'information ainsi corrigée et notée $\Omega c1$, on applique un changement de repère 221 permettant de passer d'un repère lié aux gyromètres vers un repère terrestre. Après ce changement de repère, l'information $\Omega t1$ est utilisée pour déterminer au repère 231 l'attitude de l'aéronef qui est affichée sur les moyens d'affichage 131.

L'opérateur 201 reçoit l'information $\Omega1$ à laquelle il soustrait la dérive $d\Omega1$ élaborée par les moyens 211 à partir de l'information $\Omega t1$ et d'une information $\gamma1$ provenant d'accéléromètres appartenant à l'unité de mesure inertielle 121. L'information $\gamma1$ associée à l'information $\Omega t1$ permet de déterminer au repère 241 une erreur $\varepsilon1$ qui est par exemple filtrée au moyen d'un filtre de Kalman puis intégrée pour déterminer la dérive $d\Omega1$. Le filtrage et l'intégration sont représentés au repère 251.

Les opérations décrites à la figure 2 ne permettent pas d'initialiser la dérive $d\Omega1$ si l'instrument combiné de secours ICS1 est en mouvement. Plus précisément, les gyromètres mesurent le mouvement de l'aéronef combiné avec la rotation de la terre et la dérive des gyromètres. En mettant en oeuvre un procédé tel que décrit à l'aide de la figure 2, n'utilisant qu'un seul instrument combiné de secours, la distinction entre le mouvement de l'aéronef et les deux autres paramètres que sont la dérive et la rotation de la terre devient difficile.

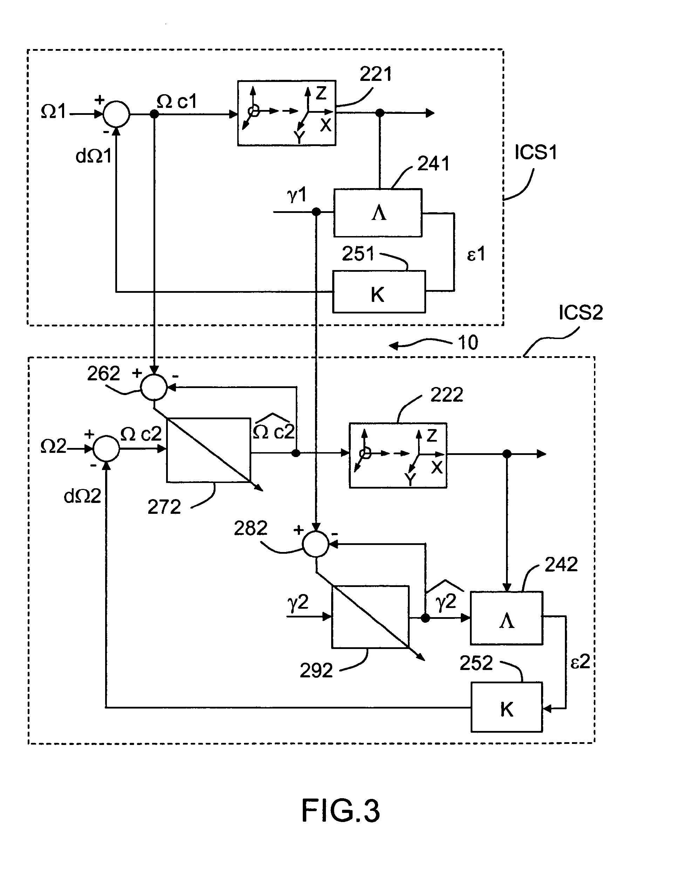

Selon l'invention, on aligne mutuellement les unités de mesure inertielle de chaque instrument combiné de secours ICS1 et ICS2 à partir d'une position relative de chaque instrument et de mesures effectuées par chaque instrument pendant une même période de temps. La figure 3 illustre un exemple de moyens pour réaliser cet alignement ainsi que le procédé associé. Pour ne pas surcharger la figure 3, seuls les moyens pour aligner l'instrument combiné de secours ICS2 ont été représentés, Par symétrie, en inversant les moyens et informations relatifs aux deux instruments combinés de secours, on retrouve aisément comment mettre en oeuvre l'invention pour l'instrument combiné de secours ICS1.

Avantageusement, l'instrument combiné de secours ICS2 comporte des moyens pour transformer les mesures effectuées par l'unité de mesure inertielle 122 pour les ramener au lieu de l'instrument combiné de secours ICS1 et des moyens de soustraction 262 entre la mesure $\Omega 1$ effectuée par l'instrument combiné de secours ICS1 et la mesure effectuée par l'instrument combiné de secours ICS2 après transformation et notée $\widehat{\Omega c2}$ Plus précisément, l'instrument combiné de secours ICS2 comporte un filtre adaptatif 272 dont les paramètres sont adaptés en fonction d'un résultat issu des moyens de soustraction 262. Le filtre adaptatif 272 assure la transformation de l'information $\Omega c2$ mesurée par l'instrument combiné de secours ICS2 et corrigée de la dérive d$\Omega 2$ pour la ramener au lieu de l'instrument combiné de secours ICS1. Des paramètres du filtre adaptatif 272 sont adaptés en fonction du résultat de la soustraction effectuée par les moyens de soustraction 262. La valeur de la mesure $\widehat{\Omega c2}$ après transformation est une valeur estimée par le filtre adaptatif 272 du fait d'un défaut éventuel d'alignement des deux unités de mesure inertielles 121 et 122. La transformation, quant à elle, n'est fonction que de la position relative des deux instruments combinés de secours ICS1 et ICS2 et plus précisément de la position relative des unités de mesure inertielle 121 et 122. Pour choisir le filtre adaptatif optimal, il est possible d'utiliser la théorie du filtrage de Wiener. La valeur estimée $\widehat{\Omega c2}$ est utilisée en entrée des moyens de changement de repère 222.

De la même façon, l'instrument combiné de secours ICS2 comprend des moyens pour transformer des mesures $\gamma 2$ effectuées par les accéléromètres de l'instrument combiné de secours ICS2 pour les ramener au lieu de l'instrument combiné de secours ICS1 ainsi que des moyens de soustraction 282 entre la mesure $\gamma 1$ effectuée par l'instrument combiné de secours ICS1 et la mesure effectuée par l'instrument combiné de secours ICS2 après transformation et notée $\widehat{\gamma 2}$. Il s'agit, ici encore, d'une valeur estimée. A cet effet, l'instrument combiné de secours ICS2 comprend un filtre adaptatif 292 dont les paramètres sont adaptés en fonction d'un résultat issu des moyens de soustraction 282. La valeur estimée $\widehat{\gamma 2}$ est utilisée en entrée des moyens pour déterminer l'erreur $\varepsilon 2$.

Pour l'alignement, les mesures réalisées par les deux instruments combinés de secours ICS1 et ICS2 sont effectuées pendant la même période de temps pour éviter qu'un mouvement éventuel n'intervienne entre deux mesures réalisées par chacun des instruments combinés de secours ICS1 et ICS2. Avantageusement le système comporte des moyens de synchronisation des mesures faites par les deux instruments combinés de secours ICS1 et ICS2.. En synchronisant les mesures des deux séries, on évite toute perturbation de mode commun pouvant intervenir. La synchronisation est d'autant plus utile que des filtres adaptatifs, utilisant des mesures discrètes, sont mis en place. Les filtres des deux instruments combinés de secours ICS1 et ICS2 travaillent alors en parallèles et simultanément pour converger rapidement vers l'alignement des unités de mesures inertielles 121 et 122. Autrement dit, on effectue plusieurs mesures $\Omega 1$ et $\gamma 1$ à l'aide de l'instrument combiné de secours ICS1 et plusieurs mesures $\Omega 2$ et $\gamma 2$ à l'aide de l'instrument combiné de secours ICS2 et échantillonnées sur une même période de temps. Chaque mesure $\Omega 1$ est synchronisée avec une mesure $\gamma 1$ et chaque mesure $\Omega 2$ est synchronisée avec une mesure $\gamma 2$.

**Revendications**

1. Système comprenant deux instruments (ICS1, ICS2) montés à bord d'un aéronef, et des moyens de communication (10) entre les deux instruments (ICS1, ICS2), chaque instrument (ICS1, ICS2) comportant une unité de mesure inertielle (121, 122) autonome subissant des dérives comprenant une dérive intrinsèque ainsi que la rotation de la terre, **caractérisé en ce qu'**il comporte en outre des moyens d'alignement mutuels (10, 262, 272, 282, 292) de chaque unité de mesure inertielle (121, 122) à partir de la seule connaissance d'une position relative de chaque instrument (ICS, ICS2) et de mesures ($\Omega 1$, $\Omega 2$, $\gamma 1$, $\gamma 2$) effectuées par les unités de mesure inertielle (121, 122) pendant une même période de temps, et **en ce que** l'alignement de chaque instrument (ICS1, ICS2) consiste en une convergence vers une estimation précise des dérives de chacun afin de la soustraire aux mesures inertielles.

**2.** Système selon la revendication 1, **caractérisé en ce que** chaque instrument (ICS1, ICS2) comporte des moyens pour transformer (272, 292) les mesures ($\Omega 2$, $\gamma 2$) effectuées par un des instruments (ICS2) pour les ramener au lieu de l'autre instrument (ICS1) et des moyens de soustraction (262, 282) entre la mesure ($\Omega 1$, $\gamma 1$) effectuée par un des instruments (ICS1) et la mesure effectuée ($\Omega 2$, $\gamma 2$) par l'autre instrument (ICS2) après transformation $(\widehat{\Omega c2}, \widehat{\gamma 2})$ .

**3.** Système selon la revendication 2, **caractérisé en ce que** chaque instrument (ICS1, ICS2) comporte un filtre adaptatif (272, 292) dont les paramètres sont adaptés en fonction d'un résultat issu des moyens de soustraction (262, 282).

**4.** Système selon l'une des revendications précédentes, **caractérisé en ce qu'**il comporte des moyens de synchronisation des mesures ($\Omega 1$, $\Omega 2$, $\gamma 1$, $\gamma 2$) faites par les deux instruments (ICS1, ICS2).

**5.** Système selon l'une des revendications précédentes, **caractérisé en ce que** les instruments (ICS1, ICS2) sont des instruments de secours de l'aéronef.

**6.** Système selon l'une des revendications précédentes, **caractérisé en ce que** les instruments (ICS1, ICS2) sont identiques.

**7.** Procédé d'alignement d'un système comprenant deux instruments (ICS1, ICS2) montés à bord d'un aéronef, et des moyens de communication (10) entre les deux instruments (ICS1, ICS2), chaque instrument (ICS1, ICS2) comportant une unité de mesure inertielle (121, 122) autonome subissant des dérives comprenant une dérive intrinsèque ainsi que la rotation de la terre, **caractérisé en ce qu'**il consiste à aligner mutuellement chaque unité de mesure inertielle (121, 122) à partir d'une position relative de chaque instrument (ICS1, ICS2) et de mesures ($\Omega 1$, $\Omega 2$, $\gamma 1$, $\gamma 2$) effectuées par chaque Instrument (ICS1, ICS2) pendant une même période de temps et **en ce que** l'alignement de chaque- instrument (ICS1, ICS2) consiste en une convergence vers une estimation précise des dérives de chacun afin de la soustraire aux mesures inertielles.

**8.** Procédé selon la revendication 7, **caractérisé en ce qu'**il consiste à aligner de façon symétrique chacun des instruments (ICS1, ICS2) en soustrayant à une première mesure Inertielle ($\Omega 1$, $\gamma 1$) effectuée par l'un des instruments (ICS1), une seconde mesure $(\widehat{\Omega c2}, \widehat{\gamma 2})$ inertielle effectuée par l'autre instrument (ICS2), la seconde mesure $(\widehat{\Omega c2}, \widehat{\gamma 2})$ étant ramenée au lieu de la première mesure ($\Omega 1$, $\gamma 1$).

**9.** Procédé selon la revendication 8, **caractérisé en ce qu'**il consiste à utiliser un filtre adaptatif pour ramener la première mesure au lieu de la seconde mesure ($\Omega 1$, $\gamma 1$), des paramètres du filtre adaptatif étant adaptés en fonction du résultat de la soustraction.

**10.** Procédé selon la revendication 8, **caractérisé en ce qu'**il consiste à effectuer plusieurs premières mesures ($\Omega 1$, $\gamma 1$) et plusieurs secondes mesures ($\Omega 2$, $\gamma 2$) échantillonnées sur la période de temps et **en ce que** chaque première mesure ($\Omega 1$, $\gamma 1$) est synchronisée avec une seconde mesure ($\Omega 2$, $\gamma 2$).

**Claims**

**1.** A system comprising two instruments (ICS1, ICS2) mounted on board an aircraft, and means for communicating (10) between said two instruments (ICS1, ICS2), each instrument (ICS1, ICS2) comprising an autonomous inertial measuring unit (121, 122) undergoing drifts, including an intrinsic drifts well as the rotation of the earth, **characterised in that** it further comprises means (10, 262, 272, 282, 292) forth mutual alignment of each inertial measuring unit (121, 122) based solely on the knowledge of a relative position of each instrument(ICS1, ICS2) and on measurements ($\Omega 1$, $\Omega 2$, $\gamma 1$, $\gamma 2$) performed by the inertial measuring units (121, 122) during the same time period, and **in that** the alignment of each instrument(ICS1, ICS2) consists in a convergence towards a precise estimate of the drifts of each so as to subtract it from the inertial measurements.

**2.** The system according to claim 1, **characterised in that** each instrument (ICS1, ICS2) comprises means for converting (272, 292) the measurements ($\Omega 2$, $\gamma 2$) performed by one of the instruments (ICS2) in order to bring them to the location of the other instrument (ICS1) and means for subtracting (262, 282) between the measurement ($\Omega 1$, $\gamma 1$) performed by one of the instruments (ICS1) and the measurement ($\Omega 2$, $\gamma 2$) performed by the other instrument (ICS2) following conversion $(\widehat{\Omega c2}, \widehat{\gamma 2})$.

**3.** The system according to claim 2, **characterised in that** each instrument (ICS1, ICS2) comprises an adaptive filter (272, 292), the parameters of which are adapted as a function of a result originating from the subtraction means (262, 282).

**4.** The system according to any one of the preceding claims, **characterised in that** it comprises means for synchronising the measurements ($\Omega 1$, $\Omega 2$, $\gamma 1$, $\gamma 2$) undertaken by the two instruments (ICS1, ICS2).

5. The system according to any one of the preceding claims, **characterised in that** the instruments (ICS1, ICS2) are the emergency instruments of the aircraft.

6. The system according to any one of the preceding claims, **characterised in that** the instruments (ICS1, ICS2) are identical.

7. A method for aligning a system comprising two instruments (ICS1, ICS2) mounted on board an aircraft and means for communicating (10) between said two instruments (ICS1, ICS2), each instrument (ICS1, ICS2) comprising an autonomous inertial measuring unit (121, 122) undergoing drifts, including an intrinsic drifts well as the rotation of the earth, **characterised in that** it consists in mutually aligning each inertial measurement unit (121, 122) on the basis of a relative position of each instrument(ICS1, ICS2) and on measurements ($\Omega 1$, $\Omega 2$, $\gamma 1$, $\gamma 2$) performed by each instrument (ICS1, ICS2) during the same time period, and **in that** the alignment of each instrument (ICS1, ICS2) consists in a convergence towards a precise estimate of the drifts of each so as to subtract it from the inertial measurements.

8. The method according to claim 7, **characterised in that** it consists in symmetrically aligning each instrument (ICS1, ICS2) by subtracting from a first inertial measurement ($\Omega 1$, $\gamma 1$) performed by one of the instruments (ICS1), a second inertial measurement $(\widehat{\Omega c2},\ \widehat{\gamma 2})$ performed by the other instrument (ICS2), the second measurement $(\widehat{\Omega c2},\ \widehat{\gamma 2})$ being brought to the location of the first measurement ($\Omega 1$, $\gamma 1$).

9. The method according to claim 8, **characterised in that** it consists in using an adaptive filter in order to bring the first measurement to the location of the second measurement ($\Omega 1$, $\gamma 1$), the parameters of the adaptive filter being adapted as a function of the result of the subtraction.

10. The method according to claim 8, **characterised in that** it consists in performing a plurality of first measurements ($\Omega 1$, $\gamma 1$) and a plurality of second measurements ($\Omega 2$, $\gamma 2$) sampled over the time period and **in that** each first measurement ($\Omega 1$, $\gamma 1$) is synchronised with a second measurement ($\Omega 2$, $\gamma 2$).

**Patentansprüche**

1. System, das Folgendes umfasst: zwei Instrumente (ICS1, ICS2), die an Bord eines Luftfahrzeugs montiert sind, und Mittel zum Kommunizieren (10) zwischen den beiden Instrumenten (ICS1, ICS2), wobei jedes Instrument (ICS1, ICS2) eine autonome Trägheitsmesseinheit (121, 122) umfasst, die Drifts unterliegt, inklusive einer intrinsischen Drift sowie der Rotation der Erde, **dadurch gekennzeichnet, dass** es ferner Mittel (10, 262, 272, 282, 292) zum gegenseitigen Ausrichten jeder Trägheitsmesseinheit (121, 122) ausschließlich auf der Basis der Kenntnis einer relativen Position jedes Instruments (ICS1, ICS2) und der Messwerte ($\Omega 1$, $\Omega 2$, $\gamma 1$, $\gamma 2$) umfasst, die von den Trägheitsmesseinheiten (121, 122) während derselben Zeitperiode durchgeführt werden, und dadurch, dass die Ausrichtung jedes Instruments (ICS1, ICS2) aus einer Konvergenz hin zu einer präzisen Schätzung der Drifts von jedem besteht, um sie von den Trägheitsmessungen zu subtrahieren.

2. System nach Anspruch 1, **dadurch gekennzeichnet, dass** jedes Instrument (ICS1, ICS2) Mittel zum Umwandeln (272, 292) der von einem der Instrumente (ICS2) durchgeführten Messungen ($\Omega 2$, $\gamma 2$), um sie zum Ort des anderen Instruments (ICS1) zu bringen, und Mittel zum Subtrahieren (262, 282) zwischen der von einem der Instrumente (ICS1) durchgeführten Messung ($\Omega 1$, $\gamma 1$) und der von dem anderen Instrument (ICS2) durchgeführten Messung ($\Omega 2$, $\gamma 2$) nach der Umwandlung $(\widehat{\Omega c2},\ \widehat{\gamma 2})$ umfasst.

3. System nach Anspruch 2, **dadurch gekennzeichnet, dass** jedes Instrument (ICS1, ICS2) ein adaptives Filter (272, 292) umfasst, dessen Parameter in Abhängigkeit von einem von dem Subtrahiermittel (262, 282) stammenden Ergebnis adaptiert werden.

4. System nach einem der vorherigen Ansprüche, **dadurch gekennzeichnet, dass** es Mittel zum Synchronisieren der von den beiden Instrumenten (ICS1, ICS2) durchgeführten Messungen ($\Omega 1$, $\Omega 2$, $\gamma 1$, $\gamma 2$) umfasst.

5. System nach einem der vorherigen Ansprüche, **dadurch gekennzeichnet, dass** die Instrumente (ICS1, ICS2) Notinstrumente des Luftfahrzeugs sind.

6. System nach einem der vorherigen Ansprüche, **dadurch gekennzeichnet, dass** die Instrumente (ICS1, ICS2) identisch sind.

7. Verfahren zum Ausrichten eines Systems, das zwei Instrumente (ICS1, ICS2) umfasst, die an Bord eines Luftfahrzeugs montiert sind, und Mittel zum Kommunizieren (10) zwischen den zwei Instrumenten (ICS1, ICS2), wobei jedes Instrument (ICS1, ICS2) eine autonome Trägheitsmesseinheit (121, 122) umfasst, die Drifts erfährt, inklusive einer intrinsischen Drift sowie die Rotation der Erde, **dadurch gekennzeichnet, dass** es darin besteht, jede Trägheitsmesseinheit (121, 122) auf der Basis einer relativen Position jedes Instruments (ICS1, ICS2) und auf der Basis von von jedem Instrument (ICS1, ICS2) während derselben Zeitperiode durchgeführten Messungen ($\Omega 1$, $\Omega 2$, $\gamma 1$, $\gamma 2$) auszurichten, und dadurch, dass die Ausrichtung jedes Instruments (ICS1, ICS2) aus einer Konvergenz hin zu einer präzisen Schätzung der Drifts von jedem besteht, um sie von den Trägheitsmessungen zu subtrahieren.

8. Verfahren nach Anspruch 7, **dadurch gekennzeichnet, dass** es darin besteht, jedes der Instrumente (ICS1, ICS2) auszurichten, indem von einer ersten, von einem der Instrumente (ICS1) durchgeführten Trägheitsmessung ($\Omega 1$, $\gamma 1$) eine zweite, von dem anderen Instrument (ICS2) durchgeführte Trägheitsmessung $(\widehat{\Omega c2}, \widehat{\gamma 2})$ subtrahiert wird, wobei die zweite Messung $(\widehat{\Omega c2}, \widehat{\gamma 2})$ zum Ort der ersten Messung ($\Omega 1$, $\gamma 1$) gebracht wird.

9. Verfahren nach Anspruch 8, **dadurch gekennzeichnet, dass** es darin besteht, ein adaptives Filter zu verwenden, um die erste Messung zum Ort der zweiten Messung ($\Omega 1$, $\gamma 1$) zu bringen, wobei die Parameter des adaptiven Filters in Abhängigkeit vom Ergebnis der Subtraktion adaptiert werden.

10. Verfahren nach Anspruch 8, **dadurch gekennzeichnet, dass** es darin besteht, mehrere erste Messungen ($\Omega 1$, $\gamma 1$) und mehrere zweite Messungen ($\Omega 2$, $\gamma 2$) durchzuführen, die über die Zeitperiode abgetastet werden, und dadurch, dass jede erste Messung ($\Omega 1$, $\gamma 1$) mit einer zweiten Messung ($\Omega 2$, $\gamma 2$) synchronisiert wird.

**FIG.1**

**FIG.2**

FIG.3

**EP 2 220 458 B1**

## RÉFÉRENCES CITÉES DANS LA DESCRIPTION

### Documents brevets cités dans la description

- WO 2005114106 A

- EP 0557591 A